# EUROPEAN PATENT SPECIFICATION

(11) **EP 2 902 374 B1**
(45) Date of publication and mention of the grant of the patent: **10.10.2018**
(21) Application number: 14153844.7
(22) Date of filing: 04.02.2014
(51) Int. Cl.: C04B 26/26, C04B 41/00, E01C 7/22, C08L 95/00, C04B 111/00

(54) **ROAD SURFACE MATERIAL AND METHOD OF USE THEREOF**
STRASSENBELAGMATERIAL UND VERFAHREN ZUR VERWENDUNG DAVON
MATÉRIAU DE SURFACE DE ROUTE ET SON PROCÉDÉ D'UTILISATION

(43) Date of publication of application: 05.08.2015
(73) Proprietor: Evolvia, S.A.U., 28020 Madrid (ES)
(72) Inventor: López, Espiridión, 25006 Lleida (ES); Bobis, Alfredo, 25006 Lleida (ES)
(74) Representative: Manuel Illescas y Asociados, S.L.U.

(56) References cited:
- EP-A1- 1 605 022
- EP-A1- 1 780 334
- WO-A1-99/10434
- DE-U1- 9 321 468
- FR-A1- 2 977 588

## Description

### FIELD OF THE INVENTION

This invention relates to road surface materials, more particularly to hot bituminous mixtures and bitumen emulsions used in road surface applications, for example for making the wearing courses of pavement.

### BACKGROUND OF THE INVENTION

A road surface or pavement is the durable surface material laid down on an area intended to sustain vehicular or foot traffic, such as a road or a walkway.

The wearing course is, in turn, the part of said pavement intended to contact with the surface of the tires of the vehicles, or the foot of the individuals, using said pavement. Below the wearing course there is at least one additional layer known as "support", which can be made of the same or other material as the wearing course.

Wearing courses are, thus, one of the most important parts of a pavement and have a strong influence in the degree of road safety and comfort users experience during the use of said pavement.

Consequently, materials used in road surface applications, especially in the building, restoration, and/or maintenance of wearing courses, are required to meet the following technical requirements:
- Have a good resistance to displacement, that is, a transverse friction coefficient (CTF) approximately in the range of between 55 and 75, obtained through an appropriate surface texture. This feature strongly affects road safety;
- Having an acceptable evenness (for example at least 80% of the road surface having an international roughness index (IRI), given in dm/hm, of 2), both transversal and longitudinal in order to minimize rattling. This feature strongly affects the comfort of the users;
- Minimize the rolling noise both inside and outside the vehicle;
- Minimize the risk of aquaplaning and the shooting out of water to other vehicles / individuals.

Hot discontinuous mixtures like very thin asphalt concrete (BBTM) are widely used nowadays in pavement applications, especially in the building, restoration, and/or maintenance of wearing courses, since these materials are able to meet the abovementioned demanding requirements.

However, BBTM's suffer, among others, from the following limitations and/or disadvantages:
- They are bituminous mixtures which are laid between 2.5 and 3.0 cm thick and the compulsory have between 5% and 6% of modified bitumens (which can either be polymer modified bitumens, or rubber/tire powder modified bitumens), which make them high cost mixtures;
- Due to their discontinuous nature and their laying thickness, they tend to close in time, that is, to loose or modify the initial surface texture because of vehicle /individuals traffic. This fact affects mainly and to a great extent the values of resistance to displacement, to the drainage of the pavement and the absorption of rolling noise.

On the other hand, the pavement, since it is put into service, suffers a deterioration of its initial characteristics, causing a loss of its surface properties and the high cost of the restitution of these characteristics.

Finally, it is desirable that materials used in road surface applications are able to be applied and prepared fast.

EP1780334A1 discloses a road surface having an upper cover layer and/or an underlying binder layer, wherein the cover layer has 70 to 80 % by weight of mineral materials having a particle size of 2 to 8 mm, 8 to 18 % by weight of mineral materials having a particle size of 0.09 to 2 mm, and 7 to 17% by weight of mineral materials having a particle size of 0 to 0.09 mm, while the binder layer has 70 to 80 % by weight of mineral materials having a particle size of 2 to 16 mm, 15 to 30 % by weight of mineral materials having a particle size of 0.09 to 2 mm, and 3 to 10% by weight of mineral materials having a particle size of 0 to 0.09 mm.

FR2977588A1 discloses a bituminous composition comprising a granular mixture and at least one hydrocarbon binder, having 11-16 % by weight of granular materials with a particle size below 0.5 mm.

DE9321468U1 discloses a mixture for road coverings comprising 25 to 35 % by weight of grit having a grain size of 4 to 12 mm, 25 to 35 % by weight of grit having a grain size of 2 to 7 mm, 30 to 50% by weight of sand having a grain size of 0.09 to 3 mm, 5 to 7% by weight of binder in the form of bitumen, and 2 to 6% by weight of filler in the form of filter dust from an electric steelworks having a grain size of 0.03 to 0.09 mm.

EP1605022A1 discloses a building material for the production of a road surface which comprises a) 6.7 % by weight of a coating binder comprising bitumen; b) 71 % by weight of chips of a stone material, and c) 22.3 % by weight of a lightweight surcharge comprising expanded clay, wherein said stone material comprises 16 % by weight of chips having a grain size of 0.5 to 4.0 mm.

### BRIEF DESCRIPTION OF THE INVENTION

It is therefore a first object of the invention to provide a road surface material, and optionally a wearing course material, able to meet the above mentioned demanding technical requirements while addressing, in parallel, all the disadvantages and/or limitations of the prior art. For the purposes of present specification the terms "road surface material" and "wearing course material" have to be taken as equivalents.

The present invention relates to a road surface material as disclosed in claims 1 to 4, use of said road surface material as disclosed in claims 5 and 6, and a method of restoration, maintenance and/or building of road surfaces which comprises spreading of said road surface material on the relevant road surface, as disclosed in claims 7 to 12.

The road surface material according to claims 1 to 4 of the invention comprises a hot bituminous mixture (that is, a bituminous mixture intended to be applied at hot temperatures of more than 100°C, preferably of 150-175°C), said hot bituminous mixture comprising bitumen as hydrocarbon binder, an aggregate having a particle size between 3-9 mm., sand having a particle size of 0.5 to 4 mm, and a filler having a particle size between 0.060 to 0.070 mm.

Said hot bituminous mixture is, as it will be explained in more detail below, usually jointly employed together with a bituminous emulsion of modified bitumen.

The road surface material according to claims 5 and 6 of the invention can be either used for the restoration, maintenance and/or building of road surfaces, especially of wearing courses.

Moreover, the aggregate and/or the sand of a hot bituminous mixture comprised in the road surface material according to the invention can be optionally obtained by crushing quarry stone. The filler, in turn, can also be optionally obtained from the aggregate.

The abovementioned particle size ranges of the different components of the hot bituminous mixture are required for obtaining proper results when using a road surface material according to the invention for restoring, maintaining and/or building a pavement.

Another object of claims 7 to 12 the invention is a method of use of the abovementioned road surface material for restoring, maintaining and/or building a pavement, which comprises the following stages:
- The application on the relevant road surface of a bituminous emulsion of modified bitumen;
- The subsequent spreading on the relevant road surface, at a temperature of more than 100°C, preferably of 150-175 °C, and before
the significant hardening of the emulsion, of a road surface material comprising a hot bituminous mixture.

The spreading of the hot bituminous mixture can be optionally done by spraying.

Prior art methods of use of pavement building materials only contemplate spreading a hot bituminous mixture after the hardening of a bituminous emulsion of modified bitumen, which takes place after a 15 to 30 minutes exposure to ambient temperature of said bituminous emulsion of modified bitumen.

Conversely, with the road surface material and method of use thereof according to the invention, it is no longer necessary to wait the abovementioned period of time before the spreading of the hot bituminous mixture. It is neither necessary to wait until the compaction of the mixture takes place. This results in lower "put into service" times. In the method according to the present invention, the time elapsed between the application of the bituminous emulsion and the spreading of the road surface material comprising a hot bituminous mixture, is preferably less than 5 seconds.

Moreover, the road surface material and method of use thereof, according to the invention, take advantage of the rupture bituminous emulsion when it comes into contact with the hot bituminous mixture. At that moment, a boiling of the emulsion is produced by the boiling of water, which the hot aggregates cover and integrate into the mixture. Consequently, the bitumen of the emulsion "wraps" the aggregates included in the hot bituminous mixture and a resulting in a later fusion of both components.

Consequently, and as will be shown in more detailed below, a high macrotexture is obtained, which is maintained in time, since it has a thickness similar to the maximum size of the aggregate and does not allow the mixture to close.

The present material and its method of use, both of them according to the present invention, result in a thickness of material which is approximately 1/3 the thickness of prior art road surfaces.

### DETAILED DESCRIPTION OF THE INVENTION

Examples of road surface materials according to the invention will be given below.

The road surface material according to the invention comprises a hot bituminous mixture with the following composition:
- 45 to 65% in weight of aggregate having a particle size of 6 to 9 mm;
- 30 to 46% in weight of sand;
- 6 to 8% in weight of filler; and
- bitumen in a percentage over aggregate of 5.30 to 5.60;
being the sum of the percentages corresponding to the aggregate, the sand, the filler and the bitumen of 100%.

The road surface material of said present embodiment was used, following the abovementioned method according to the invention, in a road surface application. A conventional asphalt spreader, having a variable spreading width of between 2.5 and 6.5 m was used to spread the hot bituminous mixture at immediately after the modified emulsion is laid.

The hot bituminous mixture was then settled by means of metal rollers. A pneumatic tired roller was also used to obtain a best contact between the hot bituminous mixture and the bituminous emulsion.

Finally, the surface macrotexture and resistance to displacement values of the resulting road surface material where measured and compared with those corresponding to two prior art mixtures: comparative example A (PA grade BBTM, as defined in "mezclas drenantes y discontinuas" -draining and discontinuous mixtures- of PG-3 of the Spanish Directorate General for Roads, as in force on Febrary 4, 2014) and comparative example B (A grade BBTM, as defined in "mezclas drenantes y discontinuas" of PG-3 of the Spanish Directorate General for Roads). The results obtained were the following:

| CHARACTERISTIC | KIND OF MIXTURE | | |
|---|---|---|---|
| | Comparative example A | Comparative example B | 1^{st} preferred embodiment of the invention |
| SURFACE MACROTEXTURE. Min. value (mm) | 1,5 | 1,1 | 1,5-2 |
| RESISTANCE TO DISPLACEMENT. Minimum CTF | 60 | 65 | 70 |

The content and adhesion of the first preferred embodiment of the invention was also compared with prior art BBTM compositions (whose composition were as defined in PG-3 of the Spanish Directorate General for Roads). The results obtained where the following:

| CHARACTERISTIC | | KIND OF MIXTURE | | | | | | |
|---|---|---|---|---|---|---|---|---|
| | | PA-11 | PA-16 | BBTM8B | BBTM11B | BBTM8A | BBTM11A | 1^{st} embodiment |
| Content of mixture (kg/m2) | | 75-90 | 95-100 | 35-50 | 55-70 | 40-55 | 65-80 | 20-35 |
| Residual Binder in Adhesion Spray (kg/m2) | New Pavement | >0,30 | | | | >0,25 | | >0,65 |
| | Old Pavement | >0,40 | | | | >0,35 | | >0,70 |

In an even more preferred embodiment of the invention, the components forming the hot bituminous mixture have the following properties:
- The aggregate has 100% of fractured faces, a flakiness index below 18, a Los Angeles coefficient in the range of 15-20,and an accelerated polishing coefficient above 53;
- The sand has a sand equivalent, according to UNE-ES 933-9 standard, above 60; and
- The filler has fineness in the range of 0.5 to 0.8g/cm3.

The abovementioned properties are respectively measured according to the following standards:
% of fractured faces: UNE EN-933-5; flakiness index: UNE EN-933-3; Los Angeles coefficient: UNE EN-1097-2; Accelerated polishing coefficient: UNE EN-1097-8; sand equivalent: UNE EN-933-9, fineness: UNE EN-1097-3.

A third preferred embodiment of a road surface material according to the invention comprises a modified bitumen emulsion having the following characteristics:
- A binder per water content of between 58 and 62%;
- A rate of rupture of 70 to 130g;
- A positive polarity of particles;
- A flow time of 15 to 80 s; and
- An adhesiveness greater than 90%.

The abovementioned properties are respectively measured according to the following standards:
Water content: UNE EN-1428; rate of rupture: UNE EN-13075-1; polarity: UNE EN-1430; flow time: UNE EN-12846; adhesiveness: UNE EN-13614.

Flow time is measured at 40°C throughout a section of 2 mm.

Although the present invention has been described in connection with various embodiments, it will be appreciated from the specification that various combinations of elements, variations or improvements therein may be made and are within the scope of the invention, as defined by the following set of claims.

## Claims

1. Road surface material comprising a hot bituminous mixture comprising bitumen as hydrocarbon binder, an aggregate having a particle size between 6 to 9 mm, sand having a particle size of 0.5 to 4 mm, and a filler having a particle size between 0.060 to 0.070 mm and wherein the hot bituminous mixture has the following composition:
- 45 to 65% in weight of aggregate;
- 30 to 46% in weight of sand;
- 6 to 8% in weight of filler; and
- Bitumen in a percentage over aggregate of 5.30 to 5.60%,
being the sum of the percentages corresponding to the aggregate, the sand, the filler and the bitumen of 100%.

2. Road surface material, according to claim 1, **characterized in that** the aggregate and/or the sand are obtained by crushing quarry stone.

3. Road surface material, according to any previous claim, **characterized in that** the filler is obtained from the aggregate.

4. Road surface material according to any previous claim, **characterized in that** the components forming the hot bituminous mixture have the following properties:
- The aggregate has 100% of fractured faces, a flakiness index below 18, a Los Angeles coefficient in the range of 15-20, and an accelerated polishing coefficient above 53;
- The sand has a sand equivalent, according to UNE-ES 933-9 standard, above 60; and
- The filler has fineness in the range of 0.5 to 0.8g/cm3.

5. Use of a road surface material according to any of claims 1 to 4, as wearing course material.

6. Use of a road surface material according to any of claims 1 to 4, for use in the restoration, maintenance and/or building of road surfaces.

7. Method of restoration, maintenance and/or building of road surfaces, which comprises the following stages:
- The application on the relevant road surface of a bituminous emulsion of modified bitumen;
The subsequent spreading on the relevant road surface, at a temperature of more than 100ºC, and before 5 seconds of the road surface material of claims 1-4

8. Method according to claim 7, **characterized in that** the bituminous emulsion of modified bitumen has the following characteristics:
- A binder per water content of between 58 and 62%, measured according to UNE EN-1428;
- A rate of rupture of 70 to 130g, measured according to UNE EN-13075-1;
- A positive polarity of particles, measured according to UNE EN-1430;
- A flow time of 15 to 80 s, measured according to UNE EN-12846;
- And an adhesiveness greater than 90%, measured according to UNE EN-13614.

9. Method according to any of claims 7 and 8, **characterized in that** the spreading of the road surface material is done by spraying.

10. Method according to any of claims 7 to 9, **characterized in that** it further comprises a stage of settlement of the road surface material.

11. Method according to claim 10, **characterized in that** at least one metal roller is used during the settlement stage.

12. Method according to claim 11, **characterized in that** it further comprises a stage of improving the contact between the road surface material and the bituminous emulsion using at least one pneumatic tire.

## Patentansprüche

1. Fahrbahndeckenmaterial umfassend eine heiße bituminöse Mischung umfassend Bitumen als Kohlenwasserstoffbindemittel, einen Zuschlagstoff mit einer Partikelgröße zwischen 6 bis 9 mm, Sand mit einer Partikelgröße zwischen 0,5 bis 4 mm und einen Füllstoff mit einer Partikelgröße zwischen 0,060 bis 0,070 mm und wobei die heiße bituminöse Mischung die folgende Zusammensetzung aufweist:
- 45 bis 65 Gew.-% Zuschlagstoff;
- 30 bis 46 Gew.-% Sand;
- 6 bis 8 Gew.-% Füllstoff und
- Bitumen in einem Prozentsatz gegenüber dem Zuschlagstoff von 5,30 bis 5,60 %,
wobei die Summe der Prozentsätze entsprechend dem Zuschlagstoff, dem Sand, dem Füllstoff und dem Bitumen 100 % ist.

2. Fahrbahndeckenmaterial nach Anspruch 1, **dadurch gekennzeichnet, dass** der Zuschlagstoff und/oder der Sand durch das Zerkleinern von Bruchstein erhalten werden.

3. Fahrbahndeckenmaterial nach einem vorstehenden Anspruch, **dadurch gekennzeichnet, dass** der Füllstoff aus dem Zuschlagstoff erhalten wird.

4. Fahrbahndeckenmaterial nach einem vorstehenden Anspruch, **dadurch gekennzeichnet, dass** die Komponenten, welche die heiße bituminöse Mischung bilden, die folgenden Eigenschaften aufweisen:
- der Zuschlagstoff hat 100 % gebrochene Flächen, einen Flockigkeitsindex unter 18, einen Los Angeles-Koeffizienten im Bereich von 15-20 und einen beschleunigten Polierkoeffizienten über 53;
- der Sand hat eine Sandäquivalente laut der Norm UNE-ES-933-9 über 60; und
- der Füllstoff hat eine Feinheit im Bereich von 0,5 bis 0,8 g/cm³.

5. Verwendung eines Fahrbahndeckenmaterials nach einem der Ansprüche 1 bis 4 als Deckschichtmaterial.

6. Verwendung eines Fahrbahndeckenmaterials nach einem der Ansprüche 1 bis 4 zur Verwendung in der Sanierung, Wartung und/oder dem Bau von Fahrbahndecken.

7. Verfahren zur Sanierung, Wartung und/oder zum Bau von Fahrbahndecken, das die folgenden Phasen umfasst:
- die Aufbringung einer Bitumenemulsion aus modifiziertem Bitumen auf die relevante Fahrbahndecke;
- die anschließende Verteilung auf der relevanten Fahrbahndecke bei einer Temperatur von mehr als 100 °C und bevor 5 Sekunden des Fahrbahndeckenmaterials nach den Ansprüchen 1-4.

8. Verfahren nach Anspruch 7, **dadurch gekennzeichnet, dass** die Bitumenemulsion aus modifiziertem Bitumen die folgenden Merkmale aufweist:
- ein Bindemittel pro Wassergehalt von zwischen 58 und 62 % gemessen laut UNE EN-1428;
- eine Brechrate von 70 bis 130 g, gemessen laut UNE EN-13075-1;
- eine positive Teilchenpolarität, gemessen laut UNE EN-1430;
- eine Abflusszeit von 15 bis 80 s, gemessen laut UNE EN-12846;
- und ein Haftverhalten größer als 90 %, gemessen laut UNE EN-13614.

9. Verfahren nach einem der Ansprüche 7 und 8, **dadurch gekennzeichnet, dass** die Verteilung des Fahrbahndeckenmaterials durch Sprühen erfolgt.

10. Verfahren nach einem der Ansprüche 7 bis 9, **dadurch gekennzeichnet, dass** dieses weiter eine Setzungsphase des Fahrbahndeckenmaterials umfasst.

11. Verfahren nach Anspruch 10, **dadurch gekennzeichnet, dass** während der Setzungsphase mindestens eine Metallwalze verwendet wird.

12. Verfahren nach Anspruch 11, **dadurch gekennzeichnet, dass** dieses weiter eine Verbesserungsphase des Kontakts zwischen dem Fahrbahndeckenmaterial und der Bitumenemulsion unter Verwendung mindestens eines Luftreifens umfasst.

## Revendications

1. Matériau de revêtement routier comprenant un mélange bitumineux chaud comprenant du bitume comme liant hydrocarboné, un agrégat ayant une taille de particules comprise entre 6 et 9 mm, du sable ayant une taille de particules comprise entre 0,5 et 4 mm, et une matière de remplissage ayant une taille de particules comprise entre 0,060 et 0,070 mm et où le mélange bitumineux chaud a la composition suivante :
- 45 à 65% en poids d'agrégat ;
- 30 à 46% en poids de sable ;
- 6 à 8% en poids de matière de remplissage ; et
- Pourcentage de bitume sur l'agrégat de 5,30 à 5,60%,
la somme des pourcentages correspondant à l'agrégat, au sable, à la matière de remplissage et au bitume étant de 100%.

2. Matériau de revêtement routier, selon la revendication 1, **caractérisé en ce que** l'agrégat et/ou le sable sont obtenus en concassant des pierres de carrière.

3. Matériau de revêtement routier, selon l'une quelconque des revendications précédentes, **caractérisé en ce que** la matière de remplissage est obtenue à partir de l'agrégat.

4. Matériau de revêtement routier, selon l'une quelconque des revendications précédentes, **caractérisé en ce que** les composants formant le mélange bitumineux chaud ont les propriétés suivantes :
- L'agrégat présente 100% de faces fracturées, un indice d'écaillement inférieur à 18, un coefficient Los Angeles allant de 15 à 20, et un coefficient de polissage accéléré supérieur à 53 ;
- Le sable a un équivalent sable, selon la norme UNE-ES 933-9, supérieur à 60 ; et
- La matière de remplissage est d'une finesse allant de 0,5 à 0,8 g/cm³.

5. Utilisation d'un matériau de revêtement routier, selon l'une quelconque des revendications 1 à 4, comme matériau de couche d'usure.

6. Utilisation d'un matériau de revêtement routier, selon l'une quelconque des revendications 1 à 4, à utiliser dans la restauration, l'entretien et/ou la construction de revêtements routiers.

7. Procédé de restauration, d'entretien et/ou de construction de revêtements routiers, qui comprend les étapes suivantes :
- L'application sur le revêtement routier en question d'une émulsion bitumineuse de bitume modifié ;
- Ensuite l'épandage sur le revêtement routier en question, à une température supérieure à 100°C, et avant 5 secondes du matériau de revêtement routier des revendications 1 à 4.

8. Procédé selon la revendication 7, **caractérisé en ce que** l'émulsion bitumineuse de bitume modifié a les caractéristiques suivantes :
- Une teneur en liant par teneur en eau compris entre 58 et 62%, mesuré selon UNE EN-1428 ;
- Un taux de cassure de 70 à 130 g, mesuré selon UNE EN-13075-1 ;
- Une polarité positive des particules, mesurée selon UNE EN-1430 ;
- Un temps d'écoulement de 15 à 80 s, mesuré selon UNE EN-12846 ;
- Et une adhésivité supérieure à 90%, mesurée selon UNE EN-1314.

9. Procédé selon l'une quelconque des revendications 7 et 8, **caractérisé en ce que** l'épandage du matériau de revêtement routier est réalisé par pulvérisation.

10. Procédé selon l'une quelconque des revendications 7 à 9, **caractérisé en ce qu'**il comprend en outre une étape de tassement du matériau de revêtement routier.

11. Procédé selon la revendication 10, **caractérisé en ce qu'**un rouleau métallique au moins est utilisé pendant l'étape de tassement.

12. Procédé selon la revendication 11, **caractérisé en ce qu'**il comprend en outre une étape d'amélioration du contact entre le matériau de revêtement routier et l'émulsion bitumineuse en utilisant au moins un pneumatique.
